# EUROPEAN PATENT APPLICATION

(11) **EP 1 442 830 A1**
(43) Date of publication of application: **04.08.2004**
(21) Application number: 04001835.0
(22) Date of filing: 28.01.2004
(51) Int. Cl.: B23P 11/00, B23P 19/02, F02M 51/06, F02M 61/16

(54) **Composite part, method of assembling the composite part, fuel injection valve provided with the composite part, and method of manufacturing the fuel injection valve**

(30) Priority: 28.01.2003 JP 2003018177
(71) Applicant: Hitachi, Ltd., Chiyoda-ku, Tokyo (JP); Hitachi Car Engineering Co., Ltd., Hitachinaka-shi, Ibaraki-ken (JP)
(72) Inventor: Ohmori, Takahiro, Hitachinaka-shi Ibaraki 312-0063 (JP); Gunji, Kenichi, Mito-shi Ibaraki 311-1135 (JP); Nakano, Masafumi, Hitachi-shi Ibaraki 316-0014 (JP); Matsumaru, Takeshi, Hitachinaka-shi Ibaraki 312-0063 (JP); Shibata, Koji, Sapporo-shi Hokkaido 062-0021 (JP)
(74) Representative: Beetz & Partner Patentanwälte

(57) **Abstract**

The present invention provides a composite part comprising a bottomed, cylindrical member (10), and an inner member (12) fitted in the cylindrical member (10), wherein either of the inner member (12) and the cylindrical member (10) is provided on its contact surface in contact with the contact surface of the other with a projection (10d), and the projection (10d) is made to fit in the other or the other is made to fit in the projection (10d), and a method of assembling the composite part.

## Description

### Background of the Invention

The present invention relates to a composite part consisting of a plurality of component members, a method of assembling the composite part, a fuel injection valve provided with the composite part, and a method of manufacturing the fuel injection valve.

A method of coaxially combining a plurality of component members of a part as applied to assembling a nozzle assembly is disclosed in JP-B No. 7-10471.

As shown in Fig. 1 of the specification of JP-B No. 7-10471, a taper hole (valve seat) 10c is formed in the bottom wall of a nozzle body (outer cylindrical member) 10 provided with an orifice 11, and a swirl chip (inner cylindrical member) 12 provided with a through hole 12a is loosely fitted in the nozzle body 10. The through hole 12a of the swirl chip 12 is aligned with the taper hole 10c by a positioning pin 14, and joining parts of the swirl chip 12 and the nozzle body 10 with a staking tool 16 are pressed so as to cause plastic flow at the joint of the joining parts to connect the swirl chip 12 and the nozzle body 10 coaxially.

In connecting the swirl chip and the nozzle body by the prior art method, only one side of the joining parts (the joining parts on the side of the end surface of the swirl chip) is connected. Therefore, swirl chip is liable to be moved radially by an external force.

In coaxially connecting the swirl chip and the nozzle body together by causing plastic flow at the joint, the swirl chip and the nozzle body can correctly coaxially be connected together if the coaxiality deviation of the respective axes of the outer and the inner circumference of the swirl chip is zero, and the coaxiality deviation of the respective axes of the inner circumference of the nozzle body and the taper hole is zero. If even either the coaxiality deviation of the nozzle body or that of the swirl chip is not zero, the balance of residual stress is ruined when the nozzle body and the swirl chip are connected coaxially by causing plastic flow at the joint, and the swirl chip and the nozzle body make different springbacks, respectively. Consequently, it is possible that an error is produced in the alignment of the respective center axes of the taper hole and the through hole of the swirl chip when the guide pin is removed after connecting the swirl chip and the nozzle body.

In assembling a fuel injection valve having a cylindrical nozzle having open opposite ends, orifice plates, and a swirl chip held between the orifice plates in the nozzle, the fuel injection valve cannot be formed in a correct length if the respective lengths of the component members are incorrect.

### Summary of the Invention

It is an object of the present invention to provide a method of firmly connecting fitting members so that the fitting members may not be displaced relative to each other by radial force, a method of coaxially combining the members capable of being coaxially combined of a composite part, a method of adjusting the length of a composite part formed by holding a swirl chip in a nozzle having a cylindrical shape by an orifice plate having the shape of a disk and provided with a central fuel injection hole to a predetermined length, a fuel injection valve using this, and a method of assembling the nozzle of a fuel injection valve.

To achieve the object, the present invention provides a composite part comprising a bottomed, cylindrical member, and an inner member fitted in the cylindrical member, wherein either of the inner member and the cylindrical member is provided on its contact surface in contact with the contact surface of the other member with a projection, and the projection is made to fit in the other member, or the other member is made to fit in the projection, and a method of assembling the composite part.

The projection is provided for positioning the outer membe and the inner member in relation to each other such that they are not displaced relative to each other. The wording "fit in" shall be understood as not limiting the form and the geometry of the projection and/or the members beyond this purpose.

### Brief Description of the Drawings

Other objects and advantages of the invention will become apparent from the following description of embodiments with reference to the accompanying drawings in which:
Figs. 1(I) to 1(IV) are longitudinal sectional views of assistance in explaining the steps of method of assembling a fuel injection valve in a first embodiment according to the present invention;
Figs. 2-1(a) to 2-1(d), and 2-2(a) to 2-2(d) are cross sectional views and fragmentary sectional views, respectively, of modifications of a projection formed on the bottom wall of a nozzle body 10 included in the fuel injection valve shown in Figs. 1(I) to 1(IV);
Fig. 3 is a longitudinal sectional view of a staking tool 15 employed in assembling the component parts of the fuel injection valve shown in Figs. 1(I) to 1(IV);
Fig. 4 is a longitudinal sectional view of the nozzle body 10 and a swirl chip 12 combined by using the staking tool 15 shown in Fig. 3;
Figs. 5(I) to 5(IV) are longitudinal sectional views of assistance in explaining the steps of method of assembling a fuel injection valve in a second embodiment according to the present invention; and
Fig. 6 is a longitudinal sectional view of a fuel infection valve.

### Detailed Description of the Preferred Embodiments

It is a first feature of the present invention that, in assembling a bottomed outer cylindrical member and an inner cylindrical member having a central through hole, a projection is formed for example on the bottom wall of the outer cylindrical member; the inner cylindrical member is inserted in the outer cylindrical member so that a clearance is formed between the inner side surface of the outer cylindrical member and the outer side surface of the inner cylindrical member, and the inner cylindrical member is seated on the bottom wall of the outer cylindrical member; a positioning pin having a diameter substantially equal to the diameter of the through hole of the inner cylindrical member is fitted in the through hole of the inner cylindrical member so that a tip part thereof is fitted in the taper hole of the outer cylindrical member to position the inner cylindrical member temporarily coaxially with the outer cylindrical member; and a part, near the joint of the inner and the outer cylindrical member, of the inner cylindrical member is pressed by a staking tool so as to cause plastic flow, to make the projection of the outer cylindrical member fit in the inner cylindrical member, and to combine the outer and the inner cylindrical member coaxially by the plastic flow of the part of the inner cylindrical member.

Since an outer circumferential part of the inner cylindrical member is sheared by the projection with the through hole of the inner cylindrical member aligned with the taper hole of the outer cylindrical member by the guide pin, concentricity between the projection and the taper hole, and the concentricity between the sheared outer circumferential part and the through hole of the inner cylindrical member coincide with each other perfectly. Thus, the outer and the inner cylindrical member can precisely coaxially be combined regardless of the dimensional accuracies thereof.

Preferably, the guide pin is pressed in the through hole of the inner cylindrical member to further improve the concentricity.

It is a second feature of the present invention that, in assembling an outer cylindrical member, an inner cylindrical member provided with a central through hole, and a disk, a projection is formed in the outer cylindrical member near a stepped part of outer cylindrical member; the inner cylindrical member is fitted in the outer cylindrical member so that the inner cylindrical member is in contact with the projection; and the disk is pressed into the outer cylindrical member for temporary assembly. The positioning pin is passed through the through hole of the inner cylindrical member so that a tip part of the guide pin is fitted in the taper hole of the disk for the temporary coaxial assembly of the outer cylindrical member, the inner cylindrical member and the disk; and the disk is pressed to make the inner cylindrical member bite in the projection of the outer cylindrical member to connect the outer cylindrical member, the inner cylindrical member and the disk coaxially. In this case, adjusting the biting depth will provide a composite part having the predetermined length.

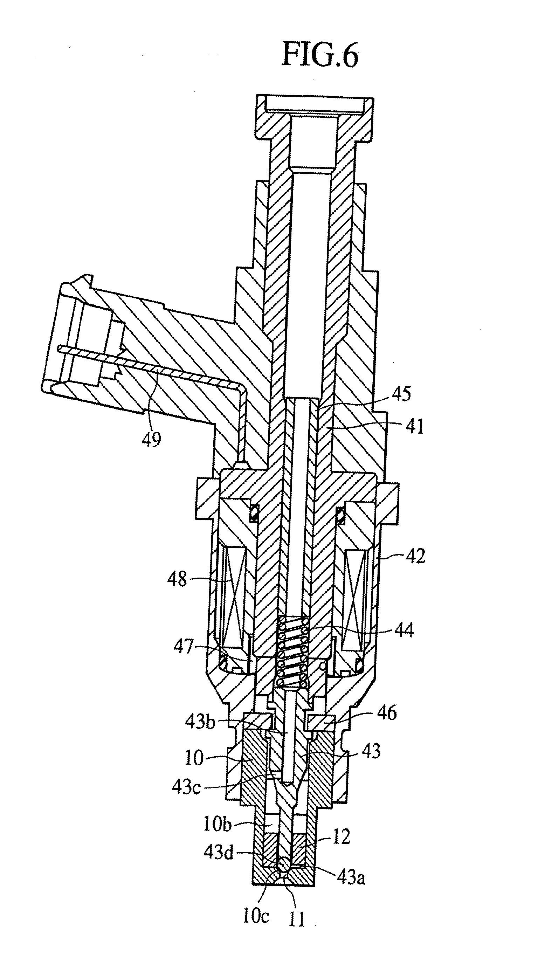

Fig. 6 is a longitudinal sectional view of a fuel injection valve for an automotive gasoline engine.

The fuel injection valve comprises a magnetic circuit including a core 41, a yoke 42 and a movable valve element 43, a solenoid 48, and a terminal bobbin 49 for supplying power to the solenoid 48. Placed in the core 41 are the movable valve element 43 provided with a valve seat 43a in its tip part, a spring 44 for pressing a seat 10c of a nozzle body 10, an adjuster for adjusting the pushing force of the spring 44, a stopper 46 for limiting the stroke of the movable valve element 43, a swirl chip 12 for swirling fuel, and a sealing ring 47 for creating nonleaking union between the core 41 and the yoke 42 to support a dry coil structure.

When the solenoid 48 of the fuel injection valve is energized, the core 41 attracts the movable valve element 43 magnetically to form a gap between a ball 43d attached to the tip of the movable valve element 43, and an orifice 11.

The fuel pressurized at a high pressure by a fuel pump flows through the core 41, the adjuster 45, the sealing ring 47, fuel passages 43b and 43c formed in the movable valve element 43, and a fuel passage 10b formed in the nozzle body 10. The swirl chip 12 swirls the fuel as the fuel flows through a swirling groove 12b formed therein, and the swirling fuel is sprayed through the gap between the orifice 11 and the ball 43d. When the solenoid 48 is de-energized, the movable valve element 43 is pressed against the valve seat 10c formed in the orifice 11 by the resilience of the spring 44 to stop spraying the fuel by closing the fuel injection valve.

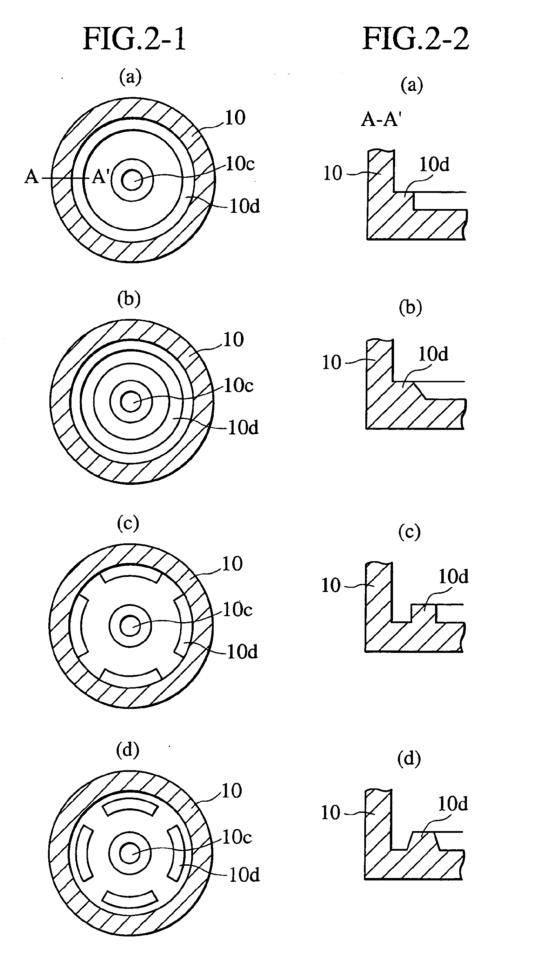

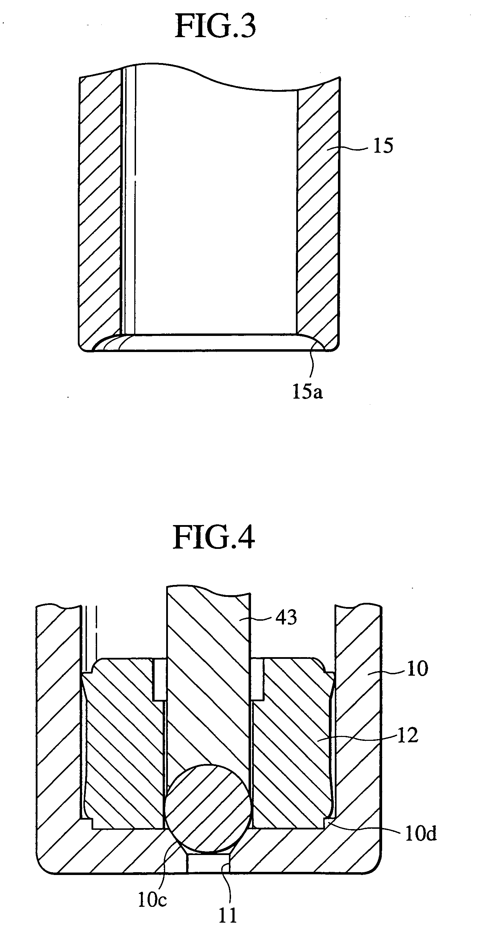

The construction of a nozzle part of the fuel injection valve will be explained. Fig. 4 is a sectional view of component members of a fuel injection valve in a first embodiment according to the present invention. Shown in Fig. 4 are a nozzle body 10, i.e., an outer cylindrical member, a swirl chip 12, i.e., an inner cylindrical member, and a movable valve element 43. The swirl chip 12 is inserted in the nozzle body 10, and the movable valve element 43 is passed through the through hole of the swirl chip 12 so that the tip part thereof is seated on the valve seat 10c formed around the orifice 11 formed in the bottom wall of the nozzle body 10. The nozzle body 10, i.e., the outer cylindrical member, is provided on its bottom wall with an annular projection 10d, for example, in a corner defined by the bottom and the side wall of the nozzle body 10. The projection 10d is made to bite the lower end surface of the swirl chip 12. Although the annular projection 10d is formed on the nozzle body 10 in Fig. 4, the projection 10d does not necessarily need to be formed in the corner defined by the side and the bottom wall of the nozzle body 10 as shown in Figs. 2-1(a), and may be formed in any place provided that the projection 10d is able to bite the lower end surface of the swirl chip 12. The projection 10d may be formed at any position on the bottom wall of the nozzle body 10 as shown in Figs. 2-1(b) and 2-1(d). The projection 10d does not necessarily need to be formed in an annular shape as shown in Figs. 2-1(a) and 2-1(b), and may be a broken annular projection as shown in Figs. 2-1(c) and 2-1(d). Fig. 2-2(a) is a sectional view taken on the line A-A' in Fig. 2-1(a). The projection 10d may have any sectional shape, provided that the projection 10d is able to bite the lower end surface of the swirl chip 12. For example, the projection 10d may be formed in any one of sectional shapes shown in Figs. 2-2(b) to 2-2(d).

A method of assembling the nozzle body 10 and the swirl chip 12 will be explained.

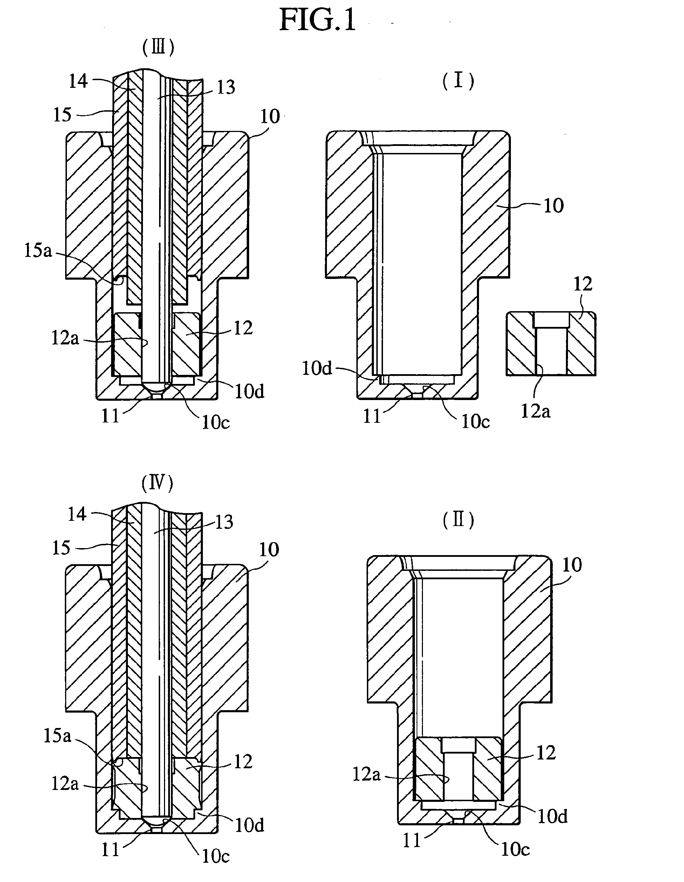

Figs. 1(I) to 1(IV) are longitudinal sectional views of assistance in explaining assembling steps. Fig. 1(I) shows the nozzle body 10 and the swirl chip 12 in a longitudinal sectional view. The nozzle body 10 has the bottom wall provided with the valve seat 10c and the orifice 11. The swirl chip 12 has a through hole 12a. The annular projection is formed in the corner defined by the side and the bottom wall of the nozzle body 10.

Referring to Fig. 1(II) showing the above components combined, the swirl chip 12 may be put loosely in the nozzle body 10 such that a clearance is formed between the nozzle body 10 and the swirl chip 12. In a state shown in Fig. 1(II), the swirl chip 12 rests on the annular projection 10d formed in the corner defined by the side and the bottom wall of the nozzle body 10.

A positioning pin 13 is passed through the through hole 12a of the swirl chip 12 so that a tip part thereof is seated on the valve seat 10c as shown in Fig. 1(III) to thereby position the swirl chip 12 temporarily so that the through hole 12a of the swirl chip 12 is coaxial with the valve seat 10c. The diameter of the through hole 12 is substantially equal to that of the positioning pin 13. Since the clearance is formed between the nozzle body 10 and the swirl chip 12, the swirl chip 12 can be positioned even if the axis of the swirl chip 12 does not coincide with that of the valve seat 10c. Then, a pressing tool 14 is pressed against the swirl chip 12 to fix the swirl chip 12 in the nozzle body 10 by making the annular projection 10d of the nozzle body 10 bite the lower end surface of the swirl chip 12. Subsequently, as shown in Fig. 1(IV), a staking tool 15 provided with projections 15a is pressed against peripheral parts of the upper end surface of the swirl chip 12 to apply mechanical pressure locally to the swirl chip 12. Consequently, the staking tool 15 presses the swirl chip 12 against the bottom wall provided with the valve seat 10c of the nozzle body 10 and causes the peripheral parts of the upper end surface of the swirl chip 12 to make plastic flow as shown in Fig. 4. Thus, the swirl chip 12 is firmly combined with the nozzle body 10. The annular projection 10d formed on the bottom wall of the nozzle body 10 bites the swirl chip 12 to restrain the swirl chip 12 from radial movement. Thus, the through hole 12a of the swirl chip 12 is kept coaxial with the valve seat 10c even after the positioning pin 13 has been removed. Since both the upper and the lower end of the swirl chip 12 are engaged with the nozzle body 10, the swirl chip 12 can firmly be held against radial forces.

When the fuel injection valve shown in Fig. 6 is assembled by the foregoing steps, the through hole 12a of the swirl chip 12 and the valve seat 10c of the nozzle body 10 are kept coaxial. Therefore, the ball 43d of the movable valve element 43 can precisely be brought into contact with the valve seat 10c to close the fuel injection valve and the leakage of the fuel can be prevented. Since a uniform annular gap can be formed between the valve seat 10c and the ball 43d in opening the fuel injection valve, the fuel can uniformly be sprayed. Since the annular projection 10d formed on the bottom wall of the nozzle body 10 bites the swirl chip 12, the swirl chip 12 is hardly dislocated relative to the nozzle body 10 even after the positioning pin 53 used to set the swirl chip 12 coaxial with the nozzle body 10 in assembling the nozzle body 10 and the swirl chip 12 has been removed. Whereas the average coaxiality deviation of the respective axes of the nozzle body 10 and the swirl chip 12 assembled by the conventional assembling method was 5.8 µm, the average coaxiality deviation of the respective axes of the nozzle body 10 and the swirl chip 12 assembled by the assembling method of the present invention was 2.3 µm. Thus, the assembling method of the present invention is capable of coaxially combining the nozzle body and the swirl chip in a high accuracy.

Even if the coaxiality deviation of the outer and the inner side surface of the swirl chip 12, and that of the valve seat 10c of the nozzle body 10 are not zero, particularly, even if springbacks occur due to the ruin of the balance of residual stress after the swirl chip 12 has been caused to make plastic flow, the through hole 12a of the swirl chip 12 can be kept coaxial with the valve seal 10c because the annular projection 10d prevents radial springbacks mechanically.

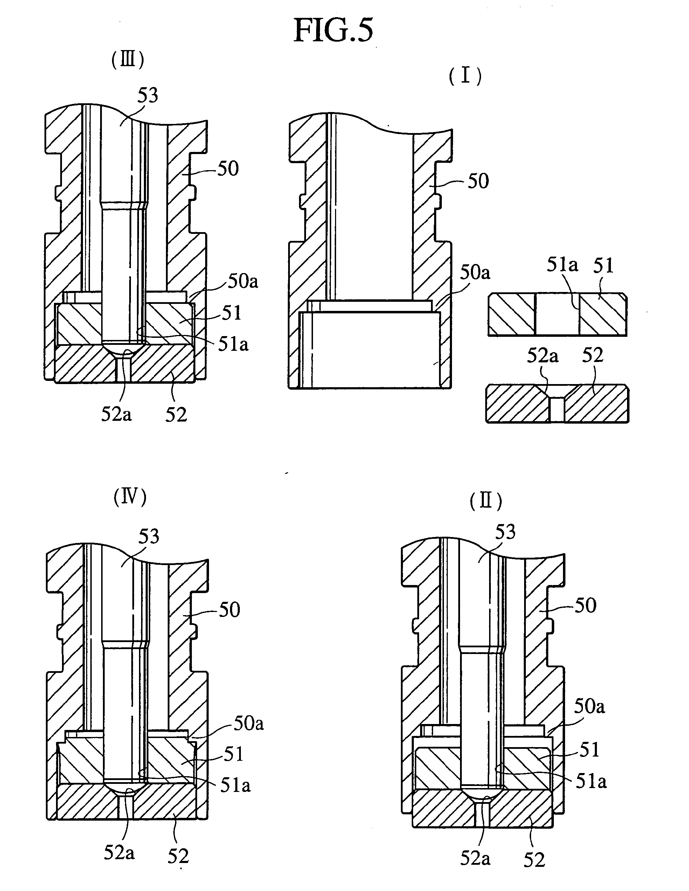

A fuel injection valve in a second embodiment according to the present invention will be described. Referring to Fig. 5(I), the fuel injection valve in the second embodiment has a cylindrical nozzle body 50 instead of the bottomed nozzle body 10 of the fuel injection valve in the first embodiment. A nozzle part of the fuel injection valve has the cylindrical nozzle body 50, a disk-shaped orifice plate 52 provided with a taper hole in its central part, and a swirl chip 51 held between the valve body 50 and the orifice plate 52. An annular projection 50a is formed on the nozzle body 50 in a corner defined by a surface on which the swirl chip 51 is seated and the side wall of the nozzle body 50. When the nozzle body 50, the swirl chip 51 and the orifice plate 52 are assembled, the annular projection 50a bites the swirl chip 51.

An assembling method of assembling the nozzle body 50, the swirl chip 51 and the orifice plate 52 will be described.

Referring to Fig. 5(I), the swirl chip 51 and the orifice plate 52 are loosely fitted in that order in a socket formed in the nozzle body 50 so that the swirl chip 51 is seated on the annular projection 50a. The outside diameter of the swirl chip 51 is smaller than the diameter of the socket of the nozzle body 50 and hence a clearance may be formed between the outer circumference of the swirl chip 51 and the side surface of the socket of the nozzle body 10. The orifice plate 52 is pressed in the socket temporarily. Then, as shown in Fig. 5(II), a positioning pin 53 of a diameter substantially equal to the inside diameter of the swirl chip 51 is passed through the through hole of the swirl chip 51 so that its tip part rests on a valve seat 52a formed in the orifice plate 52. Then, as shown in Fig. 5(III), orifice plate 52 is pressed further into the socket of the nozzle body 50 to hold the swirl chip 51 between the nozzle body 50 and the orifice plate 52 to align the through hole 51a of the swirl chip 51 with the valve seat 52a of the orifice plate 52. Even if the through hole 51a of the swirl chip 51 is not aligned with the valve seat 52a when the orifice plate 52 is pressed in the socket of the nozzle body 50, the swirling plate 51 can radially be moved and can correctly be positioned because the clearance is formed between the outer circumference of the swirl chip 51 and the side surface of the socket of the nozzle body 50.

Then, as shown in Fig. 5(IV), the orifice plate 52 is pressed further in the socket of the nozzle body 50 to make the annular projection 50a of the nozzle body 50 bite in the swirl chip 51. Consequently, the swirl chip 51 is combined firmly and coaxially with the nozzle body 50. The swirl chip 51 held between the nozzle body 50 and the orifice plate 52 is restrained from radial movement by the annular projection 50a biting the swirl chip 51. Thus, the through hole 51a of the swirl chip 51 remains coaxial with the valve seat 52a of the orifice plate 52 after the positioning pin 53 has been removed.

The construction of the tip part of the fuel injection valve makes possible the adjustment of the overall length of the fuel injection valve to a predetermined length after assembling the nozzle body 50, the swirl chip 51 and the orifice plate 52 by making the annular projection 50a of the nozzle body 50 bite the swirl chip 51, even if the nozzle body 50, the swirl chip 51 and the orifice plate 52 are not formed in correct longitudinal dimensions. The orifice plate 52 is fastened to the nozzle body 50 by laser welding or the like after assembling the nozzle body 50, the swirl chip 51 and the orifice plate 52 without destroying the alignment of the nozzle body 50, the swirl chip 51 and the orifice plate 52.

According to the present invention, the plurality of component members of the composite part can coaxially be assembled regardless of the dimensional accuracy of the component parts. The fitting component parts can firmly be held in place even if radial force acts on the fitting component parts after assembly. The length of the composite part thus assembled can be adjusted to a predetermined length.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. A composite part comprising:
a cylindrical member (10; 50); and
an inner member (12; 51) fitted in the cylindrical member (10; 50);
wherein either of the inner member (12; 51) and the cylindrical member (10; 50) is provided on its contact surface in contact with the contact surface of the other with a projection (10d; 50a), and the projection (10d; 50a) is made to fit in the other.

2. The composite part according to claim 1, **characterized in that** either of the inner member (12) and the cylindrical member (10; 50) is provided on its contact surface in contact with the contact surface of the other with a projection (10d; 50a), and the other is made to fit in the projection (10d; 50a).

3. The composite part according to claim 1 or 2, **characterized in that** the cylindrical member (10; 50) defines a stepped space therein, the inner member (12; 51) has a first and a second inner fitting member, a plurality of members are disposed between the first and the second inner fitting member fitted in the stepped space, a projection (10d; 50a) is formed on the contact surface of either of the first inner member and the cylindrical member (10; 50) and the projection (10d; 50a) is made to fit in the other, and a projection is formed on the contact surface of either of the second inner member and the cylindrical member (10; 50) and the projection (10d; 50a) is made to fit in the other.

4. The composite part according to claim 1 or 2, **characterized in that** the cylindrical member (10; 50) defines a stepped space therein, the inner member (12; 51) has a first inner member and a second fitting inner member, a plurality of members are disposed between the first and the second inner fittinq member fitted in the stepped space, a projection (10d; 50a) is formed on the contact surface of either of the first inner member and the cylindrical member (10; 50) and the other is made to fit in the projection, and a projection (10d; 50a) is formed on the contact surface of either of the second inner member and the cylindrical member (10; 50) and the other is made to fit in the projection (10d; 50a).

5. An assembling method of assembling a composite part including a bottomed outer cylindrical member (10; 50) having a bottom wall provided with a projection (10d; 50a) on its inner surface, and a taper hole (11) formed in its central part, and an inner cylindrical member (12; 51) having a central axial through hole and fitted in the outer cylindrical member (10; 50), said assembling method comprising:
forming the projection (10d; 50a) on the inner surface of the bottom wall of the outer cylindrical member (10; 50);
fitting the inner cylindrical member (12; 51) in the outer cylindrical member (10; 50) so as to rest on the inner surface of the bottom wall of the outer cylindrical member (10; 50);
passing a positioning pin (13; 53) through the through hole of the inner cylindrical member (12; 51) so that a tip part thereof is fitted in the taper hole formed in the bottom wall of the outer cylindrical member (10; 50);
temporarily positioning the inner cylindrical member (12; 51) so as to be coaxial with the outer cylindrical member (10; 50), and pressing the inner cylindrical member (12; 51) so as to engage with the projection of the outer cylindrical member (10; 50); and
pressing joining parts of the inner and the outer cylindrical member with a staking tool so as to cause plastic flow at the joint of the joining parts to connect the inner (12, 51) and the outer cylindrical member (10; 50) coaxially.

6. The assembling method according to claim 5, **characterized in that** a disk (52) provided with a central taper hole (52a) is combined with the outer cylindrical member (50) by the steps of:
passing a positioning pin (53) through the through hole of the inner cylindrical member (51) so that a tip part of the positioning pin is fitted in the taper hole (52a) of the disk (52);
temporarily coaxially aligning the inner cylindrical member (51), the outer cylindrical member (50) and the disk (52);
pressing the disk (52) so that the inner cylindrical member (51) is engaged with the projection (50a) of the outer cylindrical member (50); and
coaxially connecting the inner cylindrical member (51), the outer cylindrical member (50) and the disk (52).

7. A fuel injection valve comprising:
a movable valve element (43);
a magnetic circuit for driving the movable valve element (43);
a guide member (12) provided with a hole of a diameter suitable for guiding the movable valve element; and
a nozzle (10; 50) having a bottom wall provided with a fuel injection hole;
wherein the guide member (12; 51) is in engagement with a projection formed on the inner surface of the bottom of the nozzle (10; 50) or the nozzle (10; 50) is in engagement with a projection formed on the guide member (12; 51).

8. The fuel injection valve according to claim 7, **characterized in that** the guide member (12; 51) is held between a disk (52) provided with a fuel injection hole, and the cylindrical nozzle (10), and the guide member (12; 51) is in engagement with a projection (10d) formed on the inner surface of the bottom of the nozzle (10) or the nozzle is in engagement with a projection formed on the guide member (12; 51).

9. A method of manufacturing the fuel injection valve set forth in claim 8 comprising a movable valve element, a magnetic circuit for driving the movable valve element, a guide member (12; 51) provided with a hole (51a) of a diameter suitable for guiding the movable valve element, and a cylindrical nozzle, in which the guide member (12; 51) is held between a valve seat (52a) and a disk (52) provided with a fuel injection hole in the cylindrical nozzle (50), said method comprising:
pressing the disk (52) into the nozzle (50) so that the guide member (51) engages with the projection (50a) of the nozzle;
adjusting the condition of engagement of the disk (52) and the projection (50a); and
adjusting the position of the disk (52) such that the distance between the opposite end of the nozzle (50) and the valve seat (52a), or the overall length of the combination of the nozzle (50) and the disk coincides with a predetermined value.

10. A method of manufacturing the fuel injection valve set forth in claim 8 comprising a movable valve element (53), a magnetic circuit for driving the movable valve element (53), a guide member (51) provided with a hole (51a) of a diameter suitable for guiding the movable valve element (53), and a cylindrical nozzle (50), in which the guide member (51) is held between a valve seat (52a) and a disk (52) provided with a fuel injection hole in the cylindrical nozzle (50), said method comprising:
pressing the disk (52) into the nozzle (50) so that the nozzle (50) engages with the projection of the guide member (51);
adjusting the condition of engagement of the disk (52) and the projection; and
adjusting the position of the disk (52) such that the distance between the opposite end of the nozzle (50) and the valve seat (52a) or the overall length of the combination of the nozzle and the disk coincides with a predetermined value.
